(19) **Europäisches Patentamt**

**European Patent Office**

**Office européen des brevets**

(11) **EP 1 006 508 A1**

(12) **EUROPÄISCHE PATENTANMELDUNG**

(43) Veröffentlichungstag:
07.06.2000 Patentblatt 2000/23

(51) Int. Cl.[7]: **G10L 15/10**

(21) Anmeldenummer: **98811178.7**

(22) Anmeldetag: **27.11.1998**

(84) Benannte Vertragsstaaten:
**AT BE CH CY DE DK ES FI FR GB GR IE IT LI LU MC NL PT SE**
Benannte Erstreckungsstaaten:
**AL LT LV MK RO SI**

(71) Anmelder: **Ascom Systec AG**
**5506 Mägenwil (CH)**

(72) Erfinder:
**Die Erfindernennung liegt noch nicht vor**

(74) Vertreter:
**Roshardt, Werner Alfred, Dipl.-Phys.**
**Keller & Partner**
**Patentanwälte AG**
**Zeughausgasse 5**
**Postfach**
**3000 Bern 7 (CH)**

(54) **Verfahren zur Ueberprüfung einer Benutzerberechtigung**

(57) Bei einem Verfahren zur Überprüfung einer Benutzerberechtigung auf der Basis einer Benutzeridentifikation und einer Sprechererkennung wird ein Sprachproben-Testsignal einer bestimmten Länge aufgenommen. Mit einem Kernalgorithmus werden Ähnlichkeitswerte zwischen dem Sprachproben-Testsignal und verschiedenen vorgegebenen Sprachproben-Mustersignalen berechnet. Danach wird eine Rangliste der entsprechenden Benutzeridentifikationen auf der Basis der Ähnlichkeitswerte aufgestellt. Die Benutzerberechtigung wird bestätigt, wenn die vom Benutzer angegebene und zu überprüfende Identifikationsinformation innerhalb einer vorgegebenen Rangzahl ist. Die minimale Dauer der Aufnahme ist beträchtlich kürzer als die Konvergenzzeit tmax des Kernalgorithmus. Kann die Verifikation im ersten Durchlauf nicht bestätigt werden, werden zu vorgegebenen weiteren Zeitpunkten (t2, t3, tmax) weitere Tests durchgeführt. Beim Erreichen der maximalen Dauer tmax wird abgebrochen und die Verifikation abgelehnt. Wegen des erfindungsgemässen rangbasierten Ansatzes ist die Gesamtfehlerwahrscheinlichkeit nicht die Summe der Einzelfehlerwahrscheinlichkeiten (wie es der Fall bei statistisch unabhängigen Tests wäre), sondern deutlich kleiner.

Fig. 1

**Beschreibung**

**Stand der Technik**

Die Spracherkennung basiert auf Verarbeitungsalgorithmen, welche aus einem Sprachsignal eine Anzahl von charakteristischen Merkmalen extrahieren und mit abgespeicherten Referenzdaten vergleichen. In Abhängigkeit von der ermittelten Ähnlichkeit wird eine Zuordnung durchgeführt ("Erkennungsprozess").

Bei der Sprechererkennung geht es nicht darum, ein gesprochenes Wort in einen maschinengeschriebenen Text oder einen Befehl zur Steuerung einer Maschine umzuwandeln, sondern um die Stimme des Sprechers zu erkennen. Ein Verfahren für die Sprechererkennung ist z. B. aus der US 5,469,529 bekannt. Es hat zwei Phasen, nämlich eine Trainingsphase und eine Erkennungsphase (auch Testphase genannt). In der Trainingsphase werden aus den aufgenommenen Sprachsignalen Referenzdaten erzeugt und in der Erkennungsphase werden die Sprachproben mit den Referenzdaten verglichen, um einen Sprecher zu identifizieren bzw. zu verifizieren. In beiden Phasen wird das digitalisierte Sprachsignal zunächst einer sogenannten akustischen Analyse unterworfen, um danach eine Kovarianz-Matrix zu berechnen. In der Trainingsphase wird die Kovarianz-Matrix invertiert und in einer Datenbank als Muster bzw. Referenz abgespeichert. In der Testphase wird die Kovarianz-Matrix der Sprachprobe mit der in der Datenbank abgespeicherten invertierten Kovarianz-Matrix (Muster) multipliziert. Aus dem Produkt werden die Eigenwerte "λk" und aus diesen ein Ähnlichkeitswert "S" bestimmt.

Das anhand der US 5,469,529 erläuterte Verfahren ist ein Beispiel für einen sogenannten Kernalgorithmus. (Mit dem Begriff "Kernalgorithmus" soll zum Ausdruck gebracht werden, dass es sich beim genannten Verfahren rechnerisch um den Kern einer Sprechererkennung handelt.) Unter einem Kernalgorithmus wird im folgenden ganz allgemein ein Verfahren verstanden, welches dazu bestimmt ist, ein Sprachproben-Testsignal mit einem Sprachproben-Mustersignal zu vergleichen und einen Ähnlichkeitswert zu berechnen.

Für eine zuverlässige Sprechererkennung muss die Sprachprobe eine gewisse Mindestlänge haben. Diese Länge kann von Kernalgorithmus zu Kernalgorithmus verschieden sein.

Im wesentlichen geht es darum, dass die im Rahmen der Verarbeitung gebildete Statistik des Sprachproben-Signals erst nach einer bestimmten Zeitdauer (Konvergenzzeit) stabil wird. Die Länge der Konvergenzzeit hängt von den Eigenschaften des Kernalgorithmus ab.

Für eine erfolgreiche Anwendung der textunabhängigen Sprechererkennung in öffentlichen Systemen, d. h. in Systemen mit einem breiten Spektrum von Benutzern (z. B. Telefon-Banking, fernmündliche Bestellung von Waren oder Dienstleistungen), ist eine möglichst kurze Erkennungszeit ein wesentlicher Punkt. Das Sprechen von langen Texten zwecks Erkennung bzw. Verifikation wird vom durchschnittlichen Verkehrsteilnehmer nicht geschätzt.

Der System-Betreiber ist aus Sicherheitsgründen an einer möglichst geringen falschen Akzeptanz und an einer hohen Benutzerfreundlichkeit interessiert. (Die falsche Akzeptanz bezeichnet die Rate der Verifikations-Durchgänge, bei welchen das System fälschlicherweise zum Ergebnis einer Berechtigung gelangt.) Eine falsche Zurückweisung wird vom Benutzer als unangenehm empfunden (aus seiner Sicht ist es eine "unzureichende Systemleistung").

**Darstellung der Erfindung**

Aufgabe der Erfindung ist es, ein Verfahren der eingangs genannten Art anzugeben, welches eine möglichst kurze Erkennungszeit ohne entsprechenden Verlust an Zuverlässigkeit aufweist.

Die Lösung der Aufgabe ist durch die Merkmale des Anspruchs 1 definiert. Gemäss der Erfindung wird mit Hilfe des Kernalgorithmus das Sprachproben-Testsignal mit einer Mehrzahl von Sprachproben-Mustersignalen verglichen, wobei eine entsprechende Anzahl von Ähnlichkeitswerten ermittelt wird. Danach wird eine Rangliste der zu den Sprachproben-Mustersignalen gehörenden Benutzeridentifikationen nach Massgabe der ermittelten Ähnlichkeitswerte aufgestellt. Die Benutzerberechtigung wird bestätigt, wenn die zu überprüfende Identifikationsinformation mit einer Benutzeridentifikation innerhalb einer vorgegebenen Rangzahl übereinstimmt.

Gemäss einer bevorzugten Ausführungsform wird die Aufnahme des Sprachproben-Testsignals um eine vorgegebene Dauer verlängert, um einen erneuten Benutzer-Verifikationstest durchzuführen, falls die Benutzerverifikation im ersten Durchlauf negativ ausgegangen ist. Dieses Vorgehen kann wiederholt werden, bis eine maximal vorgegebene Testzeit abgelaufen ist. Ist die Konvergenzzeit des Kernalgorithmus erreicht, können weitere Tests das Ergebnis nicht mehr verbessern. Die maximale Testzeit entspricht also im wesentlichen der Konvergenzzeit des Kernalgorithmus.

Das erfindungsgemässe Verfahren erlaubt es, die Erkennungszeit entsprechend den Gegebenheiten des einzelnen Tests so kurz wie möglich zu halten. Ein "guter" Sprecher wird also eine kürzere Testzeit haben als ein "schlechter". Weiter kann bei einer guten Qualität des akustischen Signals der Test im Durchschnitt schneller beendet werden als bei einer schlechten.

Es ist zu beachten, dass beim erfindungsgemässen Verfahren die falsche Akzeptanz nicht entsprechend der Anzahl Tests (quasi proportional) zunimmt, sondern einen systemspezifischen Grenzwert nicht überschreitet.

Die minimale Dauer t1 der Aufnahme des Sprachproben-Testsignals wird vorzugsweise wie folgt berechnet: Zuerst wird auf der Basis einer vorgegebenen maximalen falschen Akzeptanz f1 die Rangzahl R gemäss

$$R = Nf_1 + 1$$

bestimmt (N = Anzahl Benutzer im System). Danach wird die Dauer t1 so gewählt, dass bei einem vorgegebenen zulässigen Überschreitungsfaktor $\alpha > 1$ die Funktionabeziehung

$$g(KA; t_1, R) = \alpha R$$

gilt. Mit g(KA;t1,R) ist eine auf den Kernalgorithmus KA bezogene Funktion bezeichnet, welche angibt, wieviele der zum Zeitpunkt t1 innerhalb der Rangzahl R liegenden Benutzer auch für jeden späteren Zeitpunkt t>t1 innerhalb der Rangzahl R bleiben.

Die maximal zulässige Testzeit tmax kann im wesentlichen dem kleinsten Wert tmax entsprechen, für den gilt

$$g(KA; t_{max}, R) = R$$

Es versteht sich, dass die obige Gleichung eher in einem statistischen Sinn als in einem analytisch-algebraischen zu verstehen bzw. zu erfüllen ist.

Um quasi eine dynamische Erkennungsdauer zu realisieren, kann im Bereich zwischen der minimalen und der maximalen Dauer t1 bzw. tmax eine vorgegebene Anzahl M von weiteren Testzeitpunkten vorgesehen sein. Dabei werden die Zeitpunkte nicht zeitlich äquidistant, sondern unter Anwendung der folgenden Formel festgelegt:

$$g(KA; t_i, R) = R\left(1 + \frac{(\alpha - 1)i}{M}\right)$$

Ziel der obigen Wahl der Testzeitpunkte ti ist es, mit möglichst wenigen Durchläufen eine Verifikation zu erreichen.

Die Verifikation eines Benutzers mit Hilfe der Sprechererkennung bietet sich in erster Linie dort an, wo die Kommunikation über die Sprache erfolgt, also beim Telefon. Die Qualität der Verbindung kann nun aber stark variieren. Damit die erfindungsgemässe Verkürzung der Sprechererkennung auch unter solchen Bedingungen funktioniert, kann das Sprachproben-Testsignal vorab einer Störungsanalyse unterworfen werden. Diese zeigt auf, ob und gegebenenfalls welche bekannten Störungstypen im Sprachproben-Testsignal vorhanden sind. Vor der Verarbeitung durch den Kernalgorithmus kann das Testsignal somit einer den gefundenen Störungstypen korrespondierenden Filterung unterzogen werden.

Ein Echo auf der Leitung kann beispielsweise einen bestimmten Störungstyp darstellen. Die korrespondierende Filterung wird also auf eine Echounterdrückung ausgerichtet sein. Echostörungen können natürlich unterschiedlich sein (z. B. hinsichtlich Stärke des Echosignals, hinsichtlich der Verzögerungszeit oder auch der Nachhallzeit). Unter Umständen kann es also auch sinnvoll bzw. notwendig sein, Echoparameter zu bestimmen und entsprechend unterschiedliche Filter anzuwenden. Als weiteres Beispiel sei das "knistern" einer Leitung erwähnt.

Das System verfügt demzufolge über eine Datenbank mit vorgegebenen Störungskompensationsfilter, welche signalspezifisch angewendet werden, um ein korrigiertes respektive normiertes Sprachproben-Testsignal zu erhalten. Letzteres wird dann der Verarbeitung durch den Kernalgorithmus zugeführt.

Anstatt das aufgenommene Sprachproben-Testsignal zu filtern, kann es auch mit einem dem ermittelten Störungstyp entsprechenden Sprachproben-Mustersignal verglichen werden. Mit anderen Worten: Für einen bestimmten Benutzer wird eine Mehrzahl von Sprachproben-Mustersignalen abgespeichert, wobei jedes dieser Mustersignale einem durch einen bekannten Störeinfluss verzerrten benutzerspezifischen Referenzsignal entspricht.

Das erfindungsgemässe Verfahren kann mit einem softwaregesteuerten Computer durchgeführt werden. Bei Bedarf können auch anwendungsspezifische Schaltungen und schnelle Signalprozessoren zum Einsatz gelangen.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

Fig. 1    ein Blockschaltbild eines erfindungsgemässen Verfahrens;

Fig. 2    eine beispielhafte Darstellung der möglichen Rangfolge bei verschieden langen Testsignalen;

Fig. 3    eine schematische Darstellung der Funktion g(KA;t,R).

Grundsätzlich sind in den Figuren gleiche Teile mit gleichen Bezugszeichen versehen.

### Wege zur Ausführung der Erfindung

Im nachfolgenden Ausführungsbeispiel geht es um eine zusätzliche Sicherheitsprüfung auf der Basis einer Sprechererkennung im Rahmen einer Telefon-Banking-Dienstleistung.

In einer ersten Phase muss der Bankkunde eine Registrierprozedur durchlaufen. Diese wird vorzugsweise telefonisch (bzw. über das Internet) durchgeführt. Es ist aber auch denkbar, dass die Registrierung in zweckspezifisch eingerichteten Räumlichkeiten der Bank erfolgt. Die zweitgenannte Variante hat den Vorteil, dass die Identität des Benutzers mit einfachen Mitteln (durch Sichtkontrolle der Identitätskarte, Pass, Führerschein) zuverlässig festgestellt werden kann. Im übrigen kann die akustische Qualität des aufgenommenen Sprachsignals besser kontrolliert werden.

Der Kunde (im folgenden Benutzer genannt) ruft eine Registrierzentrale an. Sein Anruf wird dort vorzugsweise von einem Computertelefon entgegengenommen. Dieses gibt die Instruktionen zur Führung des Benutzers aus und nimmt die erforderlichen Aufnahmen vor.

Der Benutzer wird als erstes aufgefordert, seinen PIN (Personal Identification Number) auf der Tastatur seines Telefons einzugeben. Die Identifikation kann auch dadurch erfolgen, dass der Benutzer eine persönliche Sicherheitskarte in einen Kartenleser einführt. (Der Kartenleser kann im Telefon integriert sein. Bei der Registrierung in spezifisch vorbereiteten Bankräumlichkeiten kann ein eigenständiger, mit dem Registriercomputer verbundener Kartenleser vorgesehen sein.)

Ist der Benutzer identifiziert, wird er aufgefordert, einen beliebigen (z. B. frei erfundenen) Text zu sprechen. Die Aufnahme wird durch Drücken einer Taste des Telefons gestartet. Ist die Aufnahmezeit abgelaufen, ertönt ein Tonsignal.

Der Computer ermittelt nun die Referenzdaten. Ist die Qualität des aufgenommenen Signals ungenügend (z. B. weil der Benutzer nach 15 Sekunden nichts mehr zu sagen wusste oder weil die Telefonverbindung schlecht war), wird er aufgefordert, nochmals einen Registriertext zu sprechen. Dieser kann dann zur Vervollständigung des Referenzdatensatzes verwendet werden. Die Registrierung ist damit beendet.

Die Benutzung der Tele-Banking-Dienstleistung (nach erfolgreich abgeschlossener Registrierung) geht grob gesagt wie folgt vor sich: Der Benutzer ruft in der Dienstleistungszentrale an und gibt dem Bankbeamten (oder dem Computersystem bzw. Computertelefon) seine Identität (z. B. durch Nennung seiner Kundennummer) bekannt. Das was der Benutzer sagt, kann gleichzeitig als Sprachprobe aufgenommen werden. Der Benutzer kann aber auch konkret aufgefordert werden, eine Sprachprobe abzugeben. Der Bankbeamte gibt die Identität in den Systemcomputer ein. Gleichzeitig kann die Sprachprobe mit einem vorgegebenen Kernalgorithmus analysiert und mit der Referenz verglichen werden. Liegt Ähnlichkeit zwischen der Sprachprobe und der Referenz vor, gilt der Benutzer als authentifiziert und legitimiert, die gewünschte Dienstleistung zu veranlassen.

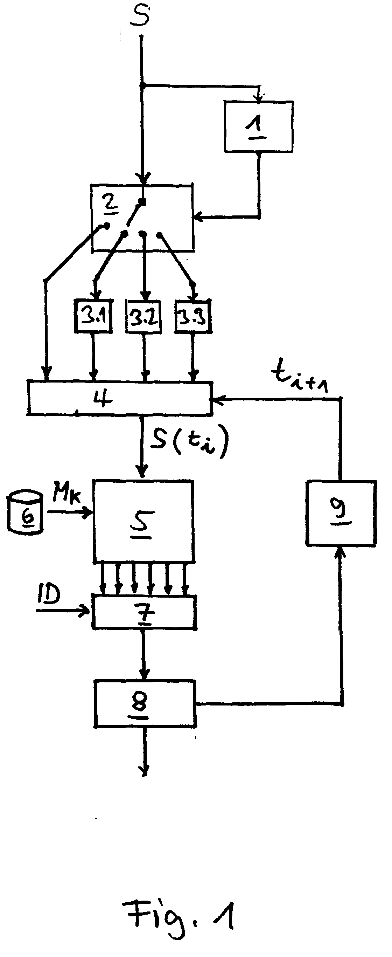

Anhand der Fig. 1 soll eine besonders bevorzugte Ausführungsform der Erfindung erläutert werden. Das zu prüfende Sprachproben-Testsignal S ist typischerweise ein digitalisiertes Audiosignal. Es wird einerseits in eine Störungsanalyse 1 und andererseits in einen Multiplexer 2 (Umschalter) gegeben. Die Störungsanalyse 1 prüft, ob einer von z. B. drei vorbekannten Störeinflüssen vorhanden ist. Wird ein bestimmter Störungstyp (z. B. Echo, Knistern oder dergleichen, Strassenlärm) erkannt, wird der Multiplexer 2 entsprechend eingestellt, so dass das Sprachproben-Testsignal S über das entsprechende Filter 3.1 bzw. 3.2 bzw. 3.3 in den Puffer 4 geleitet wird. (Selbstverständlich können auch Filter zur Unterdrückung von kombinierten Störungen vorgesehen sein; oder das Signal kann durch mehrere hintereinander geschaltete Filter geführt werden.) Wird kein Störungstyp erkannt, geht das Sprachproben-Testsignal S direkt in den Puffer 4. Das Sprachproben-Testsignal wird also vor der eigentlichen Sprechererkennung soweit möglich korrigiert und normiert.

Nach dieser (optionalen) Vorbereitung wird ein Signalabschnitt S [ti] der Länge ti (i = 1) mit dem Prozessor 5 verarbeitet. Im Prozessor 5 ist ein Kernalgorithmus implementiert, welcher einen Ähnlichkeitswert zwischen dem Signalabschnitt S[ti] und dem Referenzsignal Mk berechnet. Die Referenzsignale Mk, k = 1,..., N aller Benutzer sind in einer Datenbank 6 abgespeichert. Mit dem Prozessor 5 werden alle Referenzsignale Mk abgearbeitet. Es wird also zu jedem Referenzsignal Mk ein Ähnlichkeitswert bestimmt. Zudem wird eine Rangliste entsprechend den Ähnlichkeitswerten aufgestellt. Gemäss der Erfindung werden diejenigen Benutzer-Identifikationen ausgegeben, welche mindestens den Rang R haben. Dabei bezeichnet R eine geeignet ausgewählte Rangzahl. Im vorliegenden Beispiel gibt der Prozessor 5 die sechs ähnlichsten Benutzer-Identifikationen an einen Diskriminator 7 weiter. Dieser prüft, ob die zu verifizierende Identifikation ID unter den sechs ähnlichsten Benutzer-Identifikationen rangiert. Das Ergebnis dieses Tests wird an einen Entscheider 8 ausgegeben. Falls der zu verifizierende Benutzer in den ersten R Rängen auftaucht, gilt er als verifiziert.

Fehlt er dagegen, wird geprüft, ob die Zeitdauer ti kleiner oder gleich der maximalen Zeitdauer tmax ist. Falls ja wird der Zeitsteuerung 9 signalisiert, dass das Intervall auf eine im voraus bestimmte Zeitdauer t2 (bzw. allgemein: ti+ 1) zu verlängern ist. Aus dem Puffer 4 wird dann der nächste Signalabschnitt an den Prozessor 5 ausgegeben und dort wie oben beschrieben verarbeitet. Findet sich der zu verifizierende Sprecher danach immer noch nicht innerhalb der vorgegebenen Rangzahl, können im gleichen Sinn weitere Tests durchgeführt werden, bis die maximale Zeitdauer tmax erreicht ist. Erst wenn zum Zeitpunkt tmax die Berechtigung bzw. Verifikation nicht bestätigt werden kann, wird der Benutzer zurückgewiesen.

Ausgangspunkt ist ein konkreter Kernalgorithmus, welcher eine Bewertung der Ähnlichkeit zwischen einem Sprachproben-Testsignal und einem Sprachproben-Mustersignal durchführen kann. Als bevorzugtes Beispiel sei der Kernalgorithmus gemäss dem eingangs zitierten Patent US 5,469,529 (Bimbot) erwähnt.

Ein charakteristischer Wert des Kernalgorithmus ist die Konvergenzzeit tconv. Darunter wird der Zeitpunkt verstanden, nach welchem das Ergebnis auch bei Verlängerung der Sprachprobe nicht mehr ändert.

Als erstes wird nun ein Wert f1 für die falsche Akzeptanz der Erkennung im Konvergenzzeitpunkt tconv festgelegt. Der Wert f1 hängt von den Erfordernissen der konkreten Anwendung ab. je grösser die Sicherheit sein muss, desto niedriger muss f1 sein. Für die nachfolgenden Ausführungen wird angenommen, dass f1 = 0.03 (= 3%) die tolerierbare falsche Akzeptanz ist.

Im nächsten Schritt wird eine zu f1 analoge Rangzahl R bestimmt. Diese hängt von der Gesamtzahl N der System-Benutzer ab

$$R = Nf_1 + 1$$

Beispiel: N = 200, f1 = 0.03 ergibt R = 7. Neben dem korrekten Sprecher befinden sich also jeweils sechs weitere Sprecher im Akzeptanzbereich.

Nun wird die Funktion g(KA;t,R) mit den oben angegebenen Parameterwerten evaluiert. Mit g(KA;ti,R) ist die auf den Kernalgorithmus KA bezogene Funktion bezeichnet, welche angibt, wieviele der zum Zeitpunkt ti innerhalb der Rangzahl R liegenden Benutzer auch für jeden späteren Zeitpunkt t> ti innerhalb der Rangzahl R bleiben.

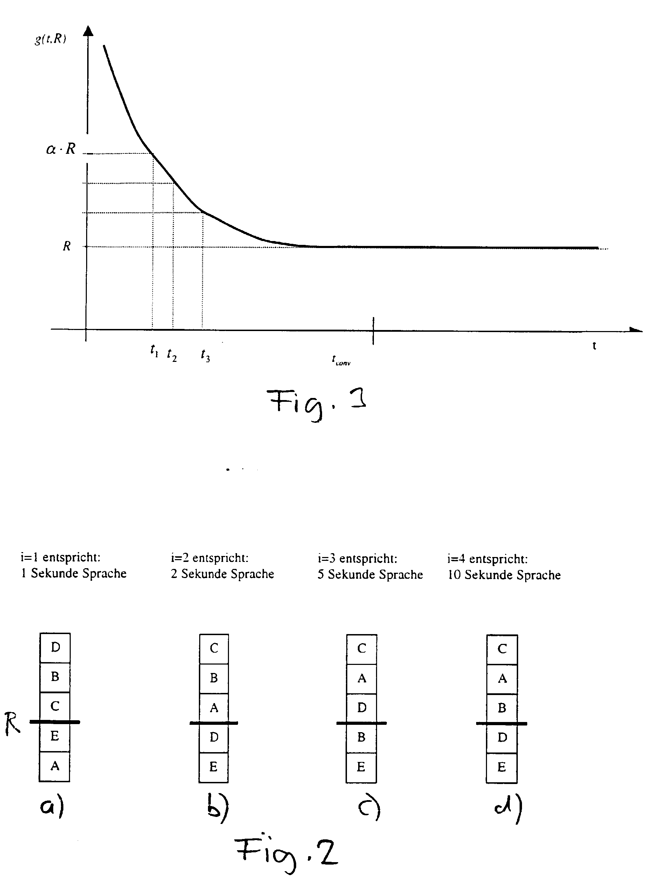

In Fig. 2a ist ein stark vereinfachtes Beispiel gezeigt. Die Identifikationsnummer (PIN) gehört zum Benutzer A. Mit dem erfindungsgemässen Verfahren wird nun verifiziert, ob die aufgenommene Sprachprobe genügend ähnlich mit dem Referenz-Muster des Benutzers A ist (welches im System abgespeichert ist).

Es sind fünf Benutzer A, B, C, D, E in der Rangliste dargestellt. Beim Auswerten einer Sprachprobe von z. B. 1 Sekunde ergibt sich die Rangfolge D, B, C, E, A. Dabei sind nur die ersten drei Benutzer D, B, C innerhalb des Bereiches, welcher durch die Rangzahl R = 3 definiert wird. Der Benutzer A findet sich erst im Rang 5.

Wird erneut eine Auswertung nach z. B. 2 Sekunden durchgeführt, ergibt sich beispielsweise die Rangfolge gemäss Fig. 2b. Der Benutzer D findet sich nicht mehr unter den ersten drei Benutzern. Neu in den zulässigen Bereich hinzugekommen ist der Benutzer A. Dieser wird daher vom System akzeptiert. Bemerkenswert ist, dass die Verifikation bereits nach 2 Sekunden und nicht erst nach 10 Sekunden abgeschlossen werden konnte. Die falsche Akzeptanz (welche in diesem Fall bei 3% liegt) ist nur wenig grösser als beim Abwarten der Zeitdauer tmax (wo sie bei 2% liegt). (Mit der vorhandenen Sprachprobe hätte sich der Benutzer A auch als Benutzer B oder C ausgeben können und wäre vom System akzeptiert worden.)

Nach beispielsweise 5 Sekunden sieht die Situation wie in Fig. 2c und nach 10 Sekunden wie in Fig. 2d dargestellt aus. Die Rangfolge der Benutzer kann also bis zum Erreichen der Konvergenzzeit variieren. Wichtig ist nicht nur, dass der richtige Benutzer (im vorliegenden Fall der Benutzer A) nicht mehr aus dem ausgewählten Bereich herausfällt, wenn er einmal drin ist, sondern auch, dass kein anderer falscher Benutzer herausfällt und Platz für einen neuen falschen Benutzer macht. Mit anderen Worten: Die Anzahl der neu in den ausgewählten Bereich gelangenden falschen Benutzer nimmt - trotz Verlängerung der Sprachprobe - nicht zu. Mit dem erfindungsgemässen Kriterium wird somit vermieden, dass die falsche Akzeptanz im Gleichtakt mit der Anzahl Tests zunimmt. Die Gesamtfehlerwahrscheinlichkeit ist nicht die Summe der Einzelfehlerwahrscheinlichkeiten (wie es der Fall bei statistisch unabhängigen Tests wäre), sondern deutlich kleiner. Dies deshalb, weil die Sprecher, die für eine falsche Akzeptanz in Frage kommen, nicht bei jedem Test statistisch aus der Gesamtzahl der Benutzer im System gewählt werden. Vielmehr bildet sich eine kleine Gruppe von Sprechern mit ähnlichen Charakteristika. Nur diese sich in den Tests wiederholende Gruppe ist für den Wert der falschen Akzeptanz massgebend.

Anhand der Fig. 3 soll die erfindungsgemässe Festlegung der Zeitpunkte t1, t2,..., tmax erklärt werden. Es ist schematisch dargestellt, wie bei einem konkreten Kernalgorithmus die beiden Grössen Zeitdauer t der Sprachprobe und Rangzahl R zusammenhängen, wenn das erfindungsgemässe Kriterium g(KA;t,R) angewendet wird.

Bei einer Sprachproben-Dauer t = tmax ist (bei vorgegebener falscher Akzeptanz und Anzahl Benutzer N) die Rangzahl R zu wählen. Die minimale Dauer t1 des Sprachproben-Testsignals wird so gewählt, dass bei einem vorgegebenen zulässigen Überschreitungsfaktor $\alpha > 1$ die Funktionsbeziehung

$$g(KA;t_1,R) = \alpha R$$

gilt. Der Überschreitungsfaktor beträgt z. B. $\alpha = 1.5$, das heisst, dass zugelassen wird, dass die falsche Akzeptanz beim ersten Test 1.5-Mal grösser ist als ursprünglich vorgegeben (z. B. 4.5% statt 3%). Der Überschreitungsfaktor legt also fest, wie stark die Erkennungszeit zu Lasten der falschen Akzeptanz verkürzt werden darf. Es ist klar, dass diese Grösse anwendungsspezifisch festzulegen ist. Sie liegt in der Regel im Bereich zwischen 1 und 2, vorzugsweise näher bei 1.

Der Bereich zwischen der minimalen und der maximalen Dauer t1 bzw. tmax wird in eine vorgegebene Anzahl M Abschnitte zerlegt. Dabei werden die Zeitpunkte ti, i = 1... M, unter Anwendung der folgenden Formel festgelegt:

$$g(KA;t_i,R) = R\left(1 + \frac{(\alpha - 1)i}{M}\right).$$

Beispiel: M = 3. Die resultierenden Testzeitpunkte sind z. B. t1 = 1 s, t2 = 2 s, t3 = 5 s, tmax = 10 s . Charakteristisch ist, dass die Intervalle zwischen den Testzeitpunkten nicht alle gleich sind, sondern mit zunehmender Dauer des gesamten Testintervalls grösser werden können.

Die Performance eines Sprechererkennungssystems wird durch die Qualität der Sprachproben beeinflusst bzw. mitbestimmt. Bei einer Verifikation (oder auch Registrierung) über das Telefon können z. B. folgende Störungen auftreten:

- Datenreduzierende Codecs (wie sie bei GSM und DECT zur Anwendung kommen),

- Unterschiedliche Mikrofoneigenschaften (bzw. Eigenschaften der Sound-Karten bei Internet-Anwendungen),

- Spezifische Eigenschaften von Freisprechmikrofonen,

- Umgebungsgeräusche (Fahr- und Motorengeräusche, Strassenlärm etc.).

Gemäss einer besonders bevorzugten Ausführungsform werden diese Störeinflüsse berücksichtigt, indem sie analysiert und erkannt und in den Signalverarbeitungsprozess einbezogen werden. Dazu wird die Sprachprobe mit bekannten Mitteln der Signal-Verarbeitung (Filterung, zeitliche und spektrale Analyse) auf bekannte Störeinflüsse hin untersucht. Ein Beispiel eines solchen Verfahrens ist aus der WO 98/06 196 (Ascom Systec) bekannt.

Wird ein bestimmter Störeinfluss entdeckt, werden die Sprachdaten so vorverarbeitet, dass sich ein normiertes qualitatives Sprachmuster ergibt. Da die verarbeitbaren Störeinflüsse bekannt sind, können auch die zugehörigen Massnahmen bei der Systemkonfiguration eingebaut werden. Ein Rechenbedarf ergibt sich dann nur für die Bereiche "Störungserkennung" und "Störungsunterdrückung/Störungsbefreiung".

Es ist denkbar, dass die Zahl der vom System zu verarbeitenden Störungen so gross ist, dass kein ausreichend gutes normiertes Sprachmuster für alle Störungstypen ermittelt werden kann. Der Informationsverlust durch die Normierung kann also unter Umständen so gross sein, dass relevante sprecherspezifische Informationen verlorengehen (das Sprachmuster wäre zu wenig spezifisch für die nachfolgende Sprechererkennung). In diesem Fall ist es möglich, die Sprachproben der Registrierung in ihrer originalen, eventuell gestörten Qualität abzuspeichern und zwar zusammen mit einer Information über die Art der Störung. In der Erkennungsphase wird nun die Qualität des Sprachproben-Testsignals bestimmt, um danach eine Konvertierungsvorschrift (Transformation) anzuwenden, welche das Sprachproben-Testsignal qualitätsmässig mit dem Referenz-Signal vergleichbar macht. Bei einer Anzahl n von möglichen Störeinflüssen ergeben sich n x n Transformationsregeln (n verschiedene Eingangssignale müssen in n verschiedene Ausgangssignale überführt werden können). Nach der Transformation wird der Kernalgorithmus angewendet.

Das soeben beschriebene Korrekturverfahren ist nicht auf die Verifikation von Benutzern beschränkt, sondern kann generell für die Sprechererkennung eingesetzt werden.

Das Verfahren arbeitet mit jedem Sprechererkennungsalgorithmus, der eine zeitlich stetige Verringerung zwischen dem aktuellen Sprachmuster und dem Zielmuster verfolgt. Zu beachten ist, dass die falsche Zurückweisung vom Kernalgorithmus unbeeinflusst bleibt.

Zusammenfassend ist festzustellen, dass durch die Erfindung ein Verfahren geschaffen worden ist, um auf der Basis eines weitgehend beliebigen Kernalgorithmus eine Verifikation mit minimaler Länge des Sprachproben-Testsignals durchzuführen.

**Patentansprüche**

1. Verfahren zur Überprüfung einer Benutzerberechtigung, wobei ein Sprachproben-Testsignal einer bestimmten Länge aufgenommen wird und mit einem Kernalgorithmus Ähnlichkeitswerte zwischen dem Sprachproben-Testsignal und verschiedenen vorgegebenen Sprachproben-Mustersignalen berechnet werden, dadurch gekennzeichnet, dass nach Massgabe der Ähnlichkeitswerte eine Rangliste der zu den Sprachproben-Mustersignalen gehörenden Benutzeridentifikationen erstellt wird und dass die Benutzerberechtigung bestätigt wird, wenn eine vom Benutzer abgegebene Identifikationsinformation mit einer Benutzeridentifikation übereinstimmt, welche innerhalb eines durch eine vorgegebene Rangzahl R definierten Bereiches liegt.

2. Verfahren nach Anspruch 1, dadurch gekennzeichnet, dass die Aufnahme des Sprachproben-Testsignals um eine vorgegebene Dauer verlängert wird, falls die Benutzerberechtigung in einem vorangegangenen Durchlauf nicht bestätigt worden ist und dass mit dem verlängerten Sprachproben-Testsignal ein erneuter Durchlauf gemacht wird.

3. Verfahren nach einem der Ansprüche 1 oder 2, dadurch gekennzeichnet, dass die Länge t1 des Sprachproben-Testsignals dadurch festgelegt wird, dass die Rangzahl R zu einer vorgegebenen maximalen falschen Akzeptanz f1 gemäss

$$R = Nf_1 + 1$$

bestimmt wird und dass t1 so gewählt wird, dass bei einem Überschreitungsfaktor $\alpha > 1$

$$g(KA; t_1, R) = \alpha R$$

gilt, wobei g(KA;t1,R) eine auf den Kernalgorithmus KA bezogene Funktion bezeichnet, welche angibt, wieviele der zum Zeitpunkt t1 innerhalb der Rangzahl R liegenden Benutzer auch für jeden späteren Zeitpunkt t > t1 innerhalb der Rangzahl R bleiben.

**4.** Verfahren nach einem der Ansprüche 2 oder 3, dadurch gekennzeichnet, dass die maximal zulässige Länge des Sprachproben-Testsignals im wesentlichen dem kleinsten Werte tmax entspricht, für den gilt:

$$g(KA; t_{max}, R) = R$$

**5.** Verfahren nach einem der Ansprüche 2 bis 4, dadurch gekennzeichnet, dass der Bereich zwischen der minimalen Dauer t1 und der maximalen Dauer tmax in eine vorgegebene Anzahl M von Intervallen mit Testzeitpunkten ti, i = 1... M, aufgeteilt wird gemäss

$$g(KA; t_i, R) = R\left(1 + \frac{(\alpha - 1)i}{M}\right)$$

**6.** Verfahren insbesondere nach einem der Ansprüche 1 bis 5, dadurch gekennzeichnet, dass das Sprachproben-Testsignal vorab einer Störungsanalyse unterworfen wird, um zu ermitteln, ob mindestens ein vorgegebener Störeinfluss bekannter Natur vorhanden ist, und dass das Sprachproben-Testsignal vor der Verarbeitung mit dem Kernalgorithmus einer den festgestellten Störeinfluss unterdrückenden Filterung bzw. Transformation unterworfen wird.

**7.** Verfahren nach Anspruch 6, dadurch gekennzeichnet, dass das Sprachproben-Testsignal durch den Kernalgorithmus mit einem Referenzsignal verglichen wird, welches dem festgestellten Störeinfluss entspricht.

Fig. 1

Fig. 3

i=1 entspricht:
1 Sekunde Sprache

i=2 entspricht:
2 Sekunde Sprache

i=3 entspricht:
5 Sekunde Sprache

i=4 entspricht:
10 Sekunde Sprache

a)   b)   c)   d)

Fig. 2

EP 1 006 508 A1

**Europäisches Patentamt**

**EUROPÄISCHER RECHERCHENBERICHT**

Nummer der Anmeldung

EP 98 81 1178

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| A,D | US 5 469 529 A (BIMBOT FREDERIC ET AL) 21. November 1995 * Zusammenfassung * | 1 | G10L5/06 |
| A | EP 0 750 294 A (SHARP KK ;JAPAN IRON & STEEL FED (JP); REAL WORLD COMPUTING PARTNE) 27. Dezember 1996 * Zusammenfassung; Anspruch 3 * | 1 | |
| A | FISSORE L ET AL: "ANALYSIS AND IMPROVEMENT OF THE PARTIAL DISTANCE SEARCH ALGORITHM" SPEECH PROCESSING, MINNEAPOLIS, APR. 27 - 30, 1993, Bd. 2, 27. April 1993, Seiten II-315-318, XP000427789 INSTITUTE OF ELECTRICAL AND ELECTRONICS ENGINEERS * Zusammenfassung * | 1 | |

**RECHERCHIERTE SACHGEBIETE (Int.Cl.6)**

G10L

Der vorliegende Recherchenbericht wurde für alle Patentansprüche erstellt

| Recherchenort | Abschlußdatum der Recherche | Prüfer |
|---|---|---|
| DEN HAAG | 29. April 1999 | Van Doremalen, J |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

4

**ANHANG ZUM EUROPÄISCHEN RECHERCHENBERICHT**
**ÜBER DIE EUROPÄISCHE PATENTANMELDUNG NR.**

EP 98 81 1178

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

29-04-1999

| Im Recherchenbericht angeführtes Patentdokument | Datum der Veröffentlichung | Mitglied(er) der Patentfamilie | Datum der Veröffentlichung |
|---|---|---|---|
| US 5469529 A | 21-11-1995 | FR 2696036 A<br>DE 69319982 D<br>DE 69319982 T<br>EP 0589791 A<br>JP 6222791 A | 25-03-1994<br>03-09-1998<br>11-03-1999<br>30-03-1994<br>12-08-1994 |
| EP 0750294 A | 27-12-1996 | JP 9006385 A<br>US 5799275 A | 10-01-1997<br>25-08-1998 |

Für nähere Einzelheiten zu diesem Anhang : siehe Amtsblatt des Europäischen Patentamts, Nr.12/82